# EUROPEAN PATENT SPECIFICATION

(11) **EP 3 186 174 B1**
(45) Date of publication and mention of the grant of the patent: **26.12.2018**
(21) Application number: 15771258.9
(22) Date of filing: 19.08.2015
(51) Int. Cl.: B65G 47/52

(54) **PRODUCT TRANSFER SYSTEM LOCATED IN AN ENCLOSED INDUSTRIAL ENVIRONMENT**
PRODUKTÜBERTRAGUNGSSYSTEM IN EINER GESCHLOSSENEN INDUSTRIELLEN UMGEBUNG
SYSTÈME DE TRANSFERT DE PRODUITS DANS UN ENVIRONNEMENT INDUSTRIEL CLOS

(30) Priority: 29.08.2014 IT BO20140474
(43) Date of publication of application: 05.07.2017
(73) Proprietor: Guidi, Anna, 40064 Ozzano Dell'emilia (Bologna) (IT)
(72) Inventor: Guidi, Anna, 40064 Ozzano Dell'emilia (Bologna) (IT)
(74) Representative: Dall'Olio, Christian
(86) International application number: PCT/IB2015/056294
(87) International publication number: WO 2016/030797

(56) References cited:
- WO-A2-2014/080389
- WO-A2-2014/080390
- US-A- 6 098 379
- US-A1- 2014 032 034

## Description

### FIELD OF THE INVENTION

The present invention relates to the technical sector concerning product transfer systems used internally of closed industrial work environments for collecting the products which are supplied in outlet from relative production lines and deposit them at an inlet of packing lines for packing the products internally of relative containers/packs.

### DESCRIPTION OF THE PRIOR ART

In the industrial field, internally of special closed environments and/or volumes of specially predisposed closed space, use is known of product transfer systems which are suitable and designed to pick up the products which are supplied in outlet by relative production lines and transfer them to an inlet of packing lines, which have to carry out the packing internally of relative packs or containers.

Usually in this environment the production lines have a different work or production regime, usually greater than that of packing lines, and generally they are also in a lesser number than the packing lines; as a consequence the transfer systems of the production must be predisposed and designed so as to enable a constant and continuous picking-up of products that have reached the outlets of the production lines, independently of the number and the effective production regime of the packing lines and/or of any eventual halts due to faults/malfunctioning and/or machine down times thereof.

At present, for this purpose, product transfer systems are known which comprise transport elements constituted by carriages, or "shuttles" in technical jargon, which are predisposed to slide on relative rails and designed for transport of the products from the outlets of the production lines to the inlets of packing lines.

In this regard, the guide rails, on which the carriages/shuttles are slidingly mounted, include a pathway which originates from an outlet of a production line and develops and extends internally of the closed environment to reach a corresponding inlet of a packing line.

The pathways of the guide rails between the outlets of the production lines and the inlets of the packing lines can also be very long and complex, as in order to compensate for the different production regime between the various lines, and to guarantee at all times a constant pick-up of products from the production line independently of the functioning of the packing line, these pathways include rings or loops along which the carriages/shuttles are made to slide (or also, possibly, be temporarily parked) as they await being directed towards a relative packing line, so as to await the right moment to take the product to the relative inlet.

Further, in a case in which the packing lines are greater in number than the production lines, exchanges must be included so that a guide rail coming from a production line can time by time connect with a plurality of guide lines, which will then reach more than one packing line, so that the carriages/shuttles can pick up the product from a production line and transfer them to more than one corresponding packing line, or to a different packing line from the one previously served.

These transfer systems of known type are substantially used in those industrial sectors of production and packing of products and articles that are not heavy and are easy to handle, such as for example in the sector of production and packing of food products (such as biscuits, wafers, pasta and so on), in the area of production and packing of medical products/articles (such as for example vials, trays/nests for containing syringes or other medical devices), the cosmetic area, healthcare, tobacco, tissues, etc.

These transfer systems however exhibit some drawbacks.

Firstly, as mentioned above, the pathways of the various guide rails can be even very complex and significantly extensive, and further the number of carriages/shuttles which it is necessary to use to adequately achieve transfer of the products from the production lines to the packing lines can also be very high.

Secondly, in consideration of the need and requirement to in any case leave free and available some passage zones for the operators tasked with controlling the plant and the functioning of the operations of transfer and the lines, some portions, even quite long, of the rails must be raised so as to enable passage below them of the operators.

Lastly, it is necessary in any case to avail of a large quantity of cables for activation, control and command of the movement of the carriages/shuttles along the rails; further, the cost of the single carriage/shuttle is not economical, and consequently the total costs for installation and predisposition of the transfer systems are undeniably high.

These systems however are unwieldy, complex and very expensive.

Document US 6.098.379 discloses a product transfer system according to the preamble of claim 1, located in a closed industrial environment according to a prior art solution.

Document WO 2014/080389 A discloses a drone delivering parcels to a ground station.

### SUMMARY OF THE INVENTION

An aim of the present invention is therefore to provide a new product transfer system internally of a closed industrial environment able to obviate the drawbacks as outlined above.

In particular, the aim of the present invention is to provide a new product transfer system usable especially in a closed industrial environment simply and effectively enabling the transfer of products from the outlets of the relative production lines to the inlets of the packing lines, and which at the same time has a modest overall cost, in particular much lower with respect to the prior-art transfer systems mentioned in the foregoing.

The aim is attained by a product transfer system in a closed industrial environment according to claim 1.

### BRIEF DESCRIPTION OF THE DRAWINGS

Other advantageous characteristics of the product transfer system of the invention are set down in claims dependent on claim 1.

The characteristics of a preferred embodiment of the transfer system of the invention will be described in the following with reference to the tables of drawings, in which:
- figure 1 is a schematic plan view of the product transfer system of the present invention located internally of a closed industrial environment;
- figure 2 schematically illustrates, in a frontal view, the transfer system of the invention;
- figure 3A illustrates, in a schematic perspective view, an element of the transfer system of the invention, while figure 3B illustrates the element in a frontal view (in these figures, by way of example a type of product that the system can transfer is illustrated, for example a tray for syringes);
- figure 4A illustrates, in a schematic lateral view, a significant component of the product transfer system of the invention, while figure 4B illustrates the component in a view from above.

### DESCRIPTION OF THE PREFERRED EMBODIMENTS

With reference to the figures of the drawings, reference numeral (10) relates to the product transfer system of the present invention.

The product transfer system (10) is developed to be specially used in a closed industrial environment (Z) where there is a volume or space internally of which transfer operations of the products are to be carried out, which products are supplied from the relative production lines, to corresponding packing lines for packing the products in relative packs/containers.

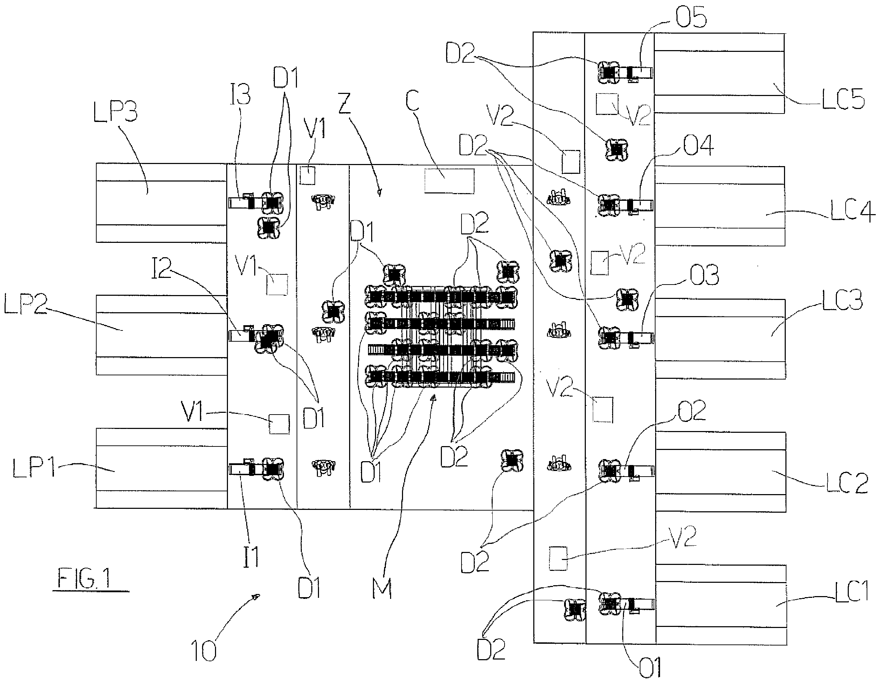

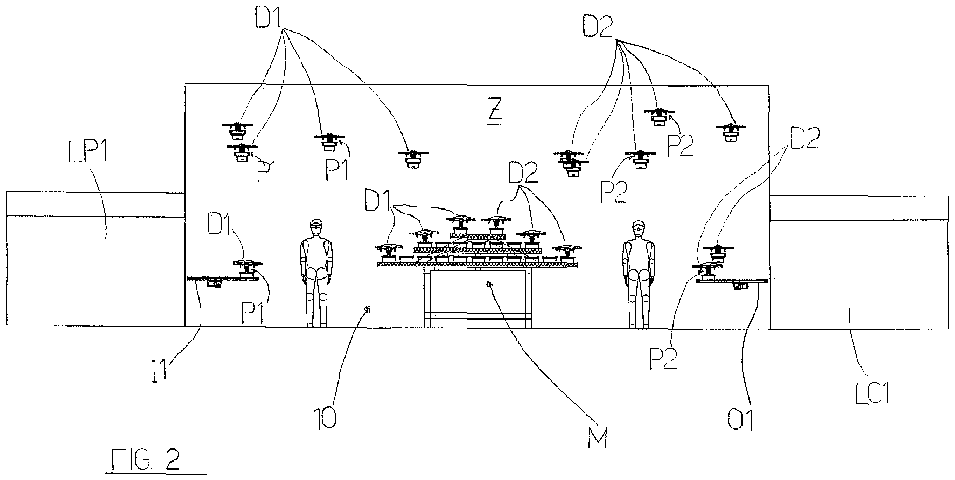

Therefore, as for example illustrated in figures 1 and 2, in the closed environment (Z) in which the product transfer system (10) of the invention is located and destined to operate, the closed environment (Z) contains at least an outlet (I1, I2, I3) of at least a corresponding production line (LP1, LP2, LP3) of a given product, the products realised by the production line (LP1, LP2, LP3) being supplied at the at least an outlet (I1, I2, I3), and at least an inlet (O1, O2, O3, O4, O5) of at least a corresponding packing line (LC1, LC2, LC3, LC4, L5) for packing the products.

Purely by way of example, in figures 1 and 2 three production lines (LP1, LP2, LP3) are represented, as well as corresponding three outlets (I1, I2, 13), each of which situated in the closed environment (Z), destined to receive the products realised by the respective production lines (LP1, LP2, LP3), and five packing lines (LC1, LC2, LC3, LC4, LC5) with corresponding five relative inlets (O1, O2, O3, O4, O5) destined to receive the products which then have to be packed by the respective packing lines (LC1, LC2, LC3, LC4, LC5).

The system disclosed by the invention can be used and applied equally in any other situation with a different number of both production lines and packing lines.

The product transfer system (10) comprises a storage warehouse (M), predisposed in an internal position of the closed environment (Z) between the at least an outlet (I1, I2, I3) of the at least a production line (LP1, LP2, LP3) and the at least an inlet (O1, O2, O3, O4, O5) of the at least a packing line (LC1, LC2, LC3, LC4, L5), and which is provided for receiving and temporarily storing the products,

The special characteristics of the product transfer system (10) of the present invention further consist of the fact that it comprises:
- a first series of drones (D1), each of which comprises relative pick-up means (P1) for picking up and releasing the products and which is predisposed so as to fly internally of the closed environment (Z),
- a second series of drones (D2), each of which comprises relative pick-up means (P2) for picking up and releasing the products and which is predisposed so as to fly internally of the closed environment (Z).

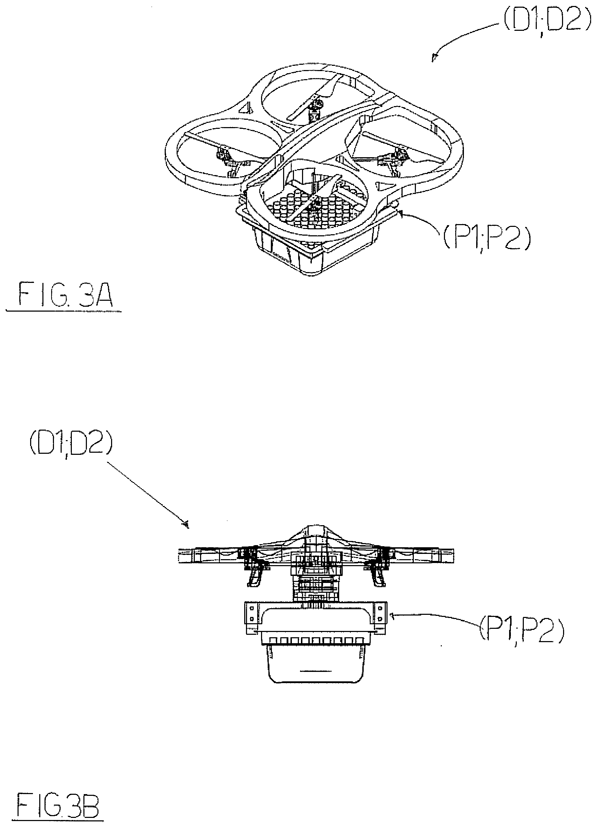

In the accompanying figures, merely by way of example, the products realised by the production lines (LP1, LP2, LP3) have been illustrated in the form of trays (or "nests") for containing syringes, and pick-up means (P1, P2) of the drones (D1, D2) of the first and second series of drones (D1, D2) are such as to be able to grip and hold this type of product stably, see for example figures 3A and 3B.

In any case, the system (10) of the invention is usable for carrying out transfer of other types of products, such as for example products of a food, pharmaceutical, cosmetic type, or another type, or also other types of containers such as pallets or trays; in this case the drones (D1, D2) of the first and second series of drones (D1, D2) will be provided with relative pick-up means (P1, P2) of a shape and structure suitable for adapting to the shape, dimensions and type of the products and/or type of containers/trays/pallets, so as to grip them and maintain them stably during the flight of the drones (D1, D2).

The product transfer system (10) is further provided with and comprises control and guide means (C; V1, V2) of the flight and airborne movement of the first series of drones (D1) and the second series of drones (D2) internally of the closed environment (Z).

Specifically, the control and guide means (C, V1, V2) are specially predisposed so as:
to control and guide the flight of the first series of drones (D1) so that each thereof can fly internally of the closed environment (Z) and, cyclically, be positioned at the at least an opening (I1, I2, I3) of the at least a production line (LP1, LP2, LP3), pick up a corresponding product, transfer the product and position the product restingly on the storage warehouse (M);
- to control and guide the flight of the second series of drones (D2) so that each thereof can fly internally of the closed environment (Z) and, cyclically, be positioned at the storage warehouse (M), pick up a product from the warehouse (M), transfer the product and position the product at the at least an inlet (O1, O2, O3, O4, O5) of the at least a packing line (LC1, LC2, LC3, LC4, LC5).

The advantages of the product transfer system (10) proposed in the present invention are clear.

Firstly, in a closed industrial environment (Z) there is no further need for predisposing and installing a series of guide rails having complex pathways and lengths; neither is it necessary to use carriages/shuttles.

Consequently, in particular the space between the outlets of the production lines and the inlets of the packing lines is completely free and the operators controlling the process can comfortably move around without any impediment.

Secondly, the installation costs of the system are considerably lower than the systems of the prior art, primarily due to the absence of guide rails, and then as the cost of a single drone is lower than the cost for predisposing and using a single carriage/shuttle.

Further, the fact of having a first series of drones (D1) dedicated only to picking up the products from the outlets of the packing lines and the transfer thereof to the warehouse, and a second series of drones (D2) dedicated only to the picking up of the products from the warehouse and transfer thereof to the inlets of the production lines, makes the transfer system (10) extremely versatile and easily adaptable to the various operational needs, in particular the production/operational regimes of the production lines, as it is able to guarantee a constant picking-up of products from the outlets of the production lines (thanks to the drones (D1) of the first series of drones (D1)) independently of the effect operating regime of the packing lines.

The system of the present invention is then particularly advantageous and economical in all those cases in which the products to be transferred are voluminous, such as for example the products constituted by containers, such as "nests" (trays for syringes) or pallets or other types of containers/trays.

In fact, in these cases, where the products are large, the prior-art systems, for reasons of surface, which is limited and determined by the distance between the production lines and the packing lines, must have recourse to the use of a very high number of carriages/shuttles and the presence of rings or loops, in the guide rail pathways, having a very high extension and length.

This is so as to be able to create a sort of temporary storage of the containers when the carriages run along these rings/loops while awaiting to be directly towards the relative packing lines: it follows that these prior-art systems are very complex and the relative cost thereof becomes very high.

The system of the invention, by using the first series of drones (D1) and the second series of drones (D2) as pick-up and transfer elements, can exploit the whole volume present internally of the closed environment (Z), and thus can carry out transfer of more voluminous products to the storage warehouse rapidly and effectively.

In particular, the product transfer system of the invention can be advantageously and economically predisposed such that the first series of drones (D1) comprises at least a pair of drones (D1) for each outlet (I1, I2, I3) of the production lines (LP1, LP2, LP3) and commandable for picking up products from the outlet (I1, I2, I3) and transferring them to the warehouse (M), and such that the second series of drones (D2) comprises at least a pair of drones (D2) for each inlet (O1, O2, O3, O4, O5) of the packing lines (LC1, LC2, LC3, LC4, LC5) which at least a pair of drones (D2) is commandable for picking up the products from the warehouse (M) and releasing them at the inlet (O1, O2, O3, O4, O5).

For example, in the example illustrated by way of example in figures 1 and 2, where internally of the closed environment (Z) there are three production lines (LP1, LP2, LP3) and five inlets (O1, O2, O3, O4, O5) of five packing lines (LC1, LC2, LC3, LC4, LC5), the system (10) will be able to use six drones (D1) as the first series of drones (D1) (two drones for each outlet of the production lines) and ten drones (D2) as the second series of drones (D2) (two drones for each inlet of the packing lines) for a total of sixteen drones.

The system is also such that that the control and guide means (C, V1, V2) of the flight and the airborne movement of the first series of drones (D1) and the second series of drones (D2) internally of the closed environment (Z) comprise a control and command unit (C) (visible and schematically represented in figure 1) for controlling and commanding, via radio frequencies, the drones (D1) of the first series of drones (D1) and the drones (D2) of the second series of drones (D2).

With the aim of more accurately and precisely controlling the aerial movement of the drones (D1, D2) of the first and second series of drones (D1, D2), and the displacement thereof with respect to the effective position of the production on the oulets of the production lines and with respect to the position of the inlets of packing lines, the system (10) is advantageously such that the control and guide means (C, V1, V2) further comprise at least a video camera (V1, V2) which is situated internally of the closed environment (Z) (for example installed in a fixed position on the floor or one a wall fo the closed environment (Z)).

The at least a video camera (V1, V2) is predisposed so as to detect and acquire images in real-time of the position of the drones (D1) of the first series of drones (D1) and the drones (D2) of the second series of drones (D2) and the location of the at least an outlet (I1, I2, I3) of the at least a production line (LP1, LP2, LP3) and the location of the at least an inlet (O1, O2, O3, O4, O5) of the at least a packing line (LC1, LC2, LC3, LC4, LC5) and to transmit information and data on the positions of the drones (D1, D2) to the control and command unit (C), which consequently can manage and control and vary, immediately, the relative control commands of the flight of the drones (D1, D2) and the displacements thereof internally of the closed environment (Z).

For example, in the preferred embodiment illustrated in the figures, in particular in figure 1, the control and guide means (C, V1, V2) can comprise a first series of video cameras (V1) situated in determined and corresponding positions internally of the closed environment (Z) (for example on the floor or on relative walls) and which are predisposed so as to detect and acquire images in real-time of the position of the drones (D1) of the first series of drones (D1) and the location of the outlets (I1, I2, I3) of the production lines (LP1, LP2, LP3) and to transmit information and data on the positions of these drones (D1) to the control and command unit (C), and also a second series of video cameras (V2) which are situated in determined and corresponding positions internally of the closed environment (Z) (for example on the floor on the relative walls) and which are predisposed for detecting and acquiring images in real-time of the position of the drones (D2) of the second series of drones (D2) and the location of the inlets (O1, O2, O3, O4, O5) of the packing lines (LC1, LC2, LC3, LC4, LC5) and for transmitting information and data on the positions of these drones (D2) to the control and command unit (C).

In this way there will be a greater and better accuracy and precision in controlling the effective position of the drones and consequently in the management of the airborne movement thereof internally of the closed environment.

Further, both the drones (D1) of the first series of drones (D1) and the drones (D2) of the second series of drones (D2) can each be provided with a GPS receiver and in that the control and command unit (C) can comprise a GPS detecting and control system of the position of the drones (D1, D2).

Lastly, a further special characteristic of the product transfer system (10) proposed in the present invention consists in the special shape and structure of the storage warehouse (M).

The product transfer system of in fact comprises a frame (T) and a series of conveyor means (T1, T2, T3) which are borne by the frame (T), the conveyor means (T1, T2, T3) being arranged in such a way as to be able to receive, at a first end thereof, the products released by the drones (D1) of the first series of drones (D1), and are consequently activatable, once the drones (D1) have released thereon the products, in such a way as to translate these products to a second end thereof, in order to more simply and effectively enable the drones (D2) of the second series of drones (D2) to pick up the products from the second end and transfer the products to the inlets (O1, O2, O3, O4, O5) of the packing lines (LC1, LC2, LC3, LC4, LC5).

For example, in order to guarantee a greater quantity of temporary product storage, the storage warehouse (M) can comprise a first series of conveyor means (T1) borne by the frame (T) which are arranged on a same first level and are flanked to one another, and at least a second series of conveyor means (T2, T3) which are in turn borne by the frame (T), flanked to one another and arranged superiorly of the first series of conveyor means (T1) and exhibiting a smaller extension than the first series of conveyor means (T1).

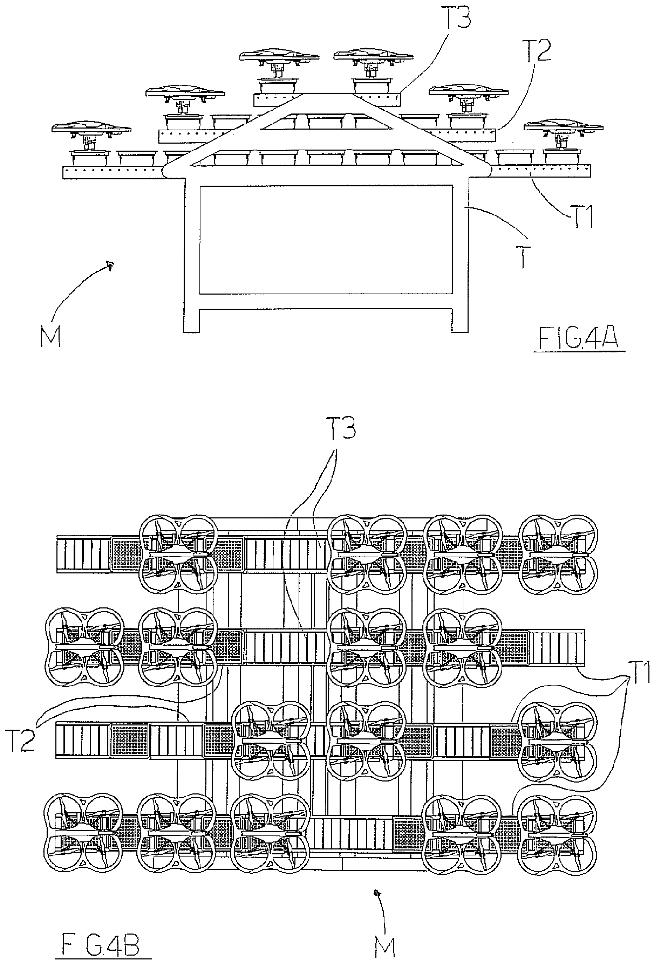

For example, in the preferred embodiment, illustrated in figures 4A and 4B, the warehouse (M) has three series of conveyor organs (T1, T2, T3) with the second series of conveyor organs (T2) superposed on the first series of conveyor organs (T1), and having a shorter extension than them, and with the third series of conveyor organs (T3) which is superposed on the second series of conveyor organs (T2) and has a shorter extension than them.

The conveyor organs (T1, T2, T3) present in the warehouse (M) can be constituted for example by loop-wound conveyor organs, such as for example mats or belts, or by a roller.

## Claims

1. A product transfer system (10) located in a closed industrial environment (Z), which closed environment (Z) contains at least an outlet (I1, I2, I3) of at least a corresponding production line (LP1, LP2, LP3) of a given product, the products realised by the production line (LP) being supplied at the at least an outlet (I1, I2, I3), and at least an inlet (O1, O2, O3, O4, O5) of at least a corresponding packing line (LC1, LC2, LC3, LC4, L5) for packing the products, the product transfer system (10) comprises:
a storage warehouse (M), predisposed in an internal position of the closed environment (Z) between the at least an outlet (I1, I2, I3) of the at least a production line (LP1, LP2, LP3) and the at least an inlet (O1, O2, O3, O4, O5) of the at least a packing line (LC1, LC2, LC3, LC4, L5), and provided for receiving and temporarily storing the products,
the product transfer system being **characterised in that** it further comprises:
a first series of drones (D1), each of which comprising relative pick-up means (P1) for picking up and releasing the products and being predisposed so as to fly internally of the closed environment (Z),
a second series of drones (D2), each of which comprising relative pick-up means (P2) for picking up and releasing the products and being predisposed so as to fly internally of the closed environment (Z),
control and guide means (C; V1, V2) of the flight and airborne movement of the first series of drones (D1) and the second series of drones (D2) internally of the closed environment (Z), the control and guide means (C, V1, V2) being predisposed such as:
to control and guide the flight of the first series of drones (D1) so that each thereof can fly internally of the closed environment (Z) and, cyclically, be positioned at the at least an opening (I1, I2, I3) of the at least a production line (LP1, LP2, LP3), pick up a corresponding product, transfer the product and position the product restingly on the storage warehouse (M);
to control and guide the flight of the second series of drones (D2) so that each thereof can fly internally of the closed environment (Z) and, cyclically, be positioned at the storage warehouse (M), pick up a product from the warehouse (M), transfer the product and position the product at the at least an inlet (O1, O2, O3, O4, O5) of the at least a packing line (LC1, LC2, LC3, LC4, LC5).

2. The product transfer system of claim 1, **characterised in that** the first series of drones (D1) comprises at least a pair of drones (D1) for each outlet (I1, I2, I3) of the production lines (LP1, LP2, LP3) and commandable for picking up products from the outlet (I1, I2, I3) and transferring them to the warehouse (M), and **in that** the second series of drones (D2) comprises at least a pair of drones (D2) for each inlet (O1, O2, O3, O4, O5) of the packing lines (LC1, LC2, LC3, LC4, LC5) which at least a pair of drones (D2) are commandable for picking up the products from the warehouse (M) and releasing them at the inlet (O1, O2, O3, O4, O5).

3. The product transfer system of any one of the preceding claims, **characterised in that** the control and guide means (C, V1, V2) of the flight and the airborne movement of the first series of drones (D1) and the second series of drones (D2) internally of the closed environment (Z) comprise a control and command unit (C) for controlling and commanding, via radio frequencies, the drones (D1) of the first series of drones (D1) and the drones (D2) of the second series of drones (D2).

4. The product transfer system of claim 3, **characterised in that** the control and guide means (C, V1, V2) further comprise at least a video camera (V1, V2) situated internally of the closed environment (Z) and predisposed so as to detect and acquire images in real-time of the position of the drones (D1) of the first series of drones (D1) and the drones (D2) of the second series of drones (D2) and the location of the at least an outlet (I1, I2, I3) of the at least a production line (LP1, LP2, LP3) and the location of the at least an inlet (O1, O2, O3, O4, O5) of the at least a packing line (LC1, LC2, LC3, LC4, LC5) and to transmit information and data on the positions of the drones (D1, D2) to the control and command unit (C).

5. The product transfer system of claim 4, **characterised in that** the control and guide means (C, V1, V2) comprise a first series of video cameras (V1) situated in determined and corresponding positions internally of the closed environment (Z) and predisposed so as to detect and acquire images in real-time of the position of the drones (D1) of the first series of drones (D1) and the location of the outlets (I1, I2, I3) of the production lines (LP1, LP2, LP3) and to transmit information and data on the positions of these drones (D1) to the control and command unit (C), and a second series of video cameras (V2) situated in determined and corresponding positions internally of the closed environment (Z) and predisposed for detecting and acquiring images in real-time of the position of the drones (D2) of the second series of drones (D2) and the location of the inlets (O1, O2, O3, O4, O5) of the packing lines (LC1, LC2, LC3, LC4, LC5) and for transmitting information and data on the positions of these drones (D2) to the control and command unit (C).

6. The product transfer system of any one of claims from 3 to 6, **characterised in that** the drones (D1) of the first series of drones (D1) and the drones (D2) of the second series of drones (D2) are each provided with a GPS receiver and **in that** the control and command unit (C) comprises a GPS detecting and control system of the position of the drones (D1, D2).

7. The product transfer system of any one of the preceding claims, **characterised in that** the storage warehouse (M) comprises a frame (T) and a series of conveyor means (T1, T2, T3) borne by the frame (T), the conveyor means (T1, T2, T3) being arranged in such a way as to be able to receive, at a first end thereof, the products released by the drones (D1) of the first series of drones (D1), and activatable in such a way as to translate these products to a second end thereof, in order to enable the drones (D2) of the second series of drones (D2) to pick up the products from the second end and transfer the products to the inlets (O1, O2, O3, O4, O5) of the packing lines (LC1, LC2, LC3, LC4, LC5).

8. The product transfer system of claim 7, **characterised in that** the storage warehouse (M) comprises a first series of conveyor means (T1) borne by the frame (T) which are arranged on a same first level and are flanked to one another, and at least a second series of conveyor means (T2, T3) borne by the frame (T), flanked to one another and arranged superiorly of the first series of conveyor means (T1) and exhibiting a smaller extension than the first series of conveyor means (T1).

## Patentansprüche

1. Produktübertragungssystem (10) in einer geschlossenen industriellen Umgebung (Z), wobei die geschlossene Umgebung (Z) zumindest einen Auslass (I1, I2, I3) zumindest einer entsprechenden Produktionslinie (LP1, LP2, LP3) eines bestimmten Produkts enthält, wobei das von der Produktionslinie (LP) hergestellte Produkt dem zumindest einen Auslass (I1, I2, I3) zugeführt wird, und zumindest einen Einlass (O1, O2, O3, O4, O5) zumindest einer entsprechenden Verpackungslinie (LC1, LC2, LC3, LC4, LC5) zum Verpacken der Produkte, wobei das Produktübertragungssystem (10) Folgendes beinhaltet:
ein Lagerungsmagazin (M), das in einer inneren Position der geschlossenen Umgebung (Z) zwischen dem zumindest einen Auslass (I1, I2, I3) der zumindest einen Produktionslinie (LP1, LP2, LP3) und dem zumindest einen Einlass (O1, O2, O3, O4, O5) der zumindest einen Verpackungslinie (LC1, LC2, LC3, LC4, LC5) angeordnet ist, und das dafür vorgesehen ist, die Produkte aufzunehmen und vorübergehend zu lagern,
wobei das Produktübertragungssystem **dadurch gekennzeichnet ist, dass** es ferner beinhaltet:
eine erste Reihe von Drohnen (D1), von denen jede entsprechende Aufnahmemittel (P1) zum Aufnehmen und Ablegen der Produkte beinhaltet und dafür ausgelegt ist, innerhalb der geschlossenen Umgebung (Z) zu fliegen,
eine zweite Reihe von Drohnen (D2), von denen jede entsprechende Aufnahmemittel (P2) zum Aufnehmen und Ablegen der Produkte beinhaltet und dafür ausgelegt ist, innerhalb der geschlossenen Umgebung (Z) zu fliegen,
Mittel (C; V1, V2) zur Steuerung und Führung des Flugs und der in der Luft ausgeführten Bewegungen der ersten Reihe von Drohnen (D1) und der zweiten Reihe von Drohnen (D2) innerhalb der geschlossenen Umgebung (Z), wobei die Steuerungs- und Führungsmittel (C, V1, V2) ausgelegt sind für:
die Steuerung und Führung des Flugs der ersten Reihe von Drohnen (D1), so dass jede davon innerhalb der geschlossenen Umgebung (Z) fliegen kann und, taktweise, an dem zumindest einen Auslass (I1, I2, I3) der zumindest einen Produktionslinie (LP1, LP2, LP3) angeordnet werden kann, um ein entsprechendes Produkt aufzunehmen, das Produkt zu übertragen und das Produkt auf dem Lagerungsmagazin (M) aufliegend abzulegen;
die Steuerung und Führung des Flugs der zweiten Reihe von Drohnen (D2), so dass jede davon innerhalb der geschlossenen Umgebung (Z) fliegen kann und, taktweise, an dem Lagerungsmagazin (M) angeordnet werden kann, um ein Produkt von dem Magazin (M) aufzunehmen, das Produkt zu übertragen und das Produkt an dem zumindest einen Einlass (O1, O2, O3, O4, O5) der zumindest einen Verpackungslinie (LC1, LC2, LC3, LC4, LC5) abzulegen.

2. Produktübertragungssystem nach Anspruch 1, **dadurch gekennzeichnet, dass** die erste Reihe von Drohnen (D1) zumindest ein Paar Drohnen (D1) für jeden Auslass (I1, I2, I3) der Produktionslinien (LP1, LP2, LP3) beinhaltet, die ansteuerbar sind, um Produkte von dem Auslass (I1, I2, I3) aufzunehmen und diese an das Magazin (M) zu übertragen, und dadurch, dass die zweite Reihe von Drohnen (D2) zumindest ein Paar Drohnen (D2) für jeden Einlass (O1, O2, O3, O4, 05) der Verpackungslinien (LC1, LC2, LC3, LC4, LC5) beinhaltet, wobei das zumindest eine Paar Drohnen (D2) ansteuerbar ist, um die Produkte von dem Magazin (M) aufzunehmen und diese an dem Einlass (O1, O2, O3, O4, O5) abzulegen.

3. Produktübertragungssystem nach einem der vorhergehenden Ansprüche, **dadurch gekennzeichnet, dass** die Steuer- und Führungsmittel (C, V1, V2) für den Flug und die in der Luft ausgeführten Bewegungen der ersten Reihe von Drohnen (D1) und der zweiten Reihe von Drohnen (D2) innerhalb der geschlossenen Umgebung (Z) eine Steuer- und Bedienungseinheit (C) zum Steuern und Bedienen, über Funkfrequenz, der Drohnen (D1) der ersten Reihe von Drohnen (D1) und der Drohnen (D2) der zweiten Reihe von Drohnen (D2) beinhalten.

4. Produktübertragungssystem nach Anspruch 3, **dadurch gekennzeichnet, dass** die Steuerungs- und Führungsmittel (C, V1, V2) ferner zumindest eine Videokamera (V1, V2) beinhalten, die sich innerhalb der geschlossenen Umgebung (Z) befinden und ausgelegt sind für die Erkennung und Aufnahme von Bildern, in Echtzeit, von der Position der Drohnen (D1) der ersten Reihe von Drohnen (D1) und der Drohnen (D2) der zweiten Reihe von Drohnen (D2) und der Anordnung des zumindest einen Auslasses (I1, I2, I3) der zumindest einen Produktionslinie (LP1, LP2, LP3) und der Anordnung des zumindest einen Einlasses (O1, O2, O3, O4, 05) der zumindest einen Verpackungslinie (LC1, LC2, LC3, LC4, LC5) und für das Übertragen von Informationen und Daten über die Positionen der Drohnen (D1, D2) an die Steuer- und Bedienungseinheit (C).

5. Produktübertragungssystem nach Anspruch 4, **dadurch gekennzeichnet, dass** die Steuerungs- und Führungsmittel (C, V1, V2) eine erste Reihe von Videokameras (V1) beinhalten, die sich an bestimmten und entsprechenden Positionen innerhalb der geschlossenen Umgebung (Z) befinden und ausgelegt sind für die Erkennung und Aufnahme von Bildern, in Echtzeit, von der Position der Drohnen (D1) der ersten Reihe von Drohnen (D1) und der Anordnung der Auslässe (I1, I2, I3) der Produktionslinien (LP1, LP2, LP3) und für das Übertragen von Informationen und Daten über die Positionen dieser Drohnen (D1) an die Steuer- und Bedienungseinheit (C), und eine zweite Reihe von Videokameras (V2) beinhalten, die sich an bestimmten und entsprechenden Positionen innerhalb der geschlossenen Umgebung (Z) befinden und ausgelegt sind für die Erkennung und Aufnahme von Bildern, in Echtzeit, von der Position der Drohnen (D2) der zweiten Reihe von Drohnen (D2) und der Anordnung der Einlässe (O1, O2, O3, O4, O5) der Verpackungslinien (LC1, LC2, LC3, LC4, LC5) und für das Übertragen von Informationen und Daten über die Positionen dieser Drohnen (D2) an die Steuer- und Bedienungseinheit (C).

6. Produktübertragungssystem nach einem der Ansprüche von 3 bis 6, **dadurch gekennzeichnet, dass** die Drohnen (D1) der ersten Reihe von Drohnen (D1) und die Drohnen (D2) der zweiten Reihe von Drohnen (D2) jeweils mit einem GPS-Empfänger ausgestattet sind und dadurch, dass die Steuer- und Bedienungseinheit (C) ein GPS Erkennungs- und Steuersystem der Position der Drohnen (D1, D2) beinhaltet.

7. Produktübertragungssystem nach einem der vorhergehenden Ansprüche, **dadurch gekennzeichnet, dass** das Lagerungsmagazin (M) einen Rahmen (T) und eine Reihe von Fördermitteln (T1, T2, T3) beinhaltet, die von dem Rahmen (T) getragen werden, wobei die Fördermittel (T1, T2, T3) derart angeordnet sind, dass sie in der Lage sind, an einem ersten Ende davon die von den Drohnen (D1) der ersten Reihe von Drohnen (D1) ausgegebenen Produkte aufzunehmen, und die aktiviert werden können, um diese Produkte an ein zweites Ende davon zu überführen, so dass es den Drohnen (D2) der zweiten Reihe von Drohnen (D2) ermöglicht wird, die Produkte von dem zweiten Ende aufzunehmen und die Produkte an die Einlässe (O1, O2, O3, O4, 05) der Verpackungslinien (LC1, LC2, LC3, LC4, LC5) zu übertragen.

8. Produktübertragungssystem nach Anspruch 7, **dadurch gekennzeichnet, dass** das Lagerungsmagazin (M) eine erste Reihe von Fördermitteln (T1) beinhaltet, die von dem Rahmen (T) getragen werden und die auf einer selben ersten Ebene und nebeneinander angeordnet sind, und zumindest eine zweite Reihe von Fördermitteln (T2, T3), die von dem Rahmen (T) getragen werden, nebeneinander angeordnet und oberhalb der ersten Reihe von Fördermitteln (T1) angeordnet sind und eine kleinere Ausdehnung aufweisen als die erste Reihe von Fördermitteln (T1).

## Revendications

1. Un système (10) de transfert de produits situé dans un environnement industriel clos (Z), ledit environnement clos (Z) contient au moins une sortie (I1, I2, I3) d'au moins une ligne de production (LP1, LP2, LP3) correspondante d'un produit donné, les produits réalisés par la ligne de production (LP) étant alimentés au niveau de ladite au moins une sortie (I1, I2, I3), et au moins une entrée (O1, O2, O3, O4, O5) d'au moins une ligne d'emballage (LC1, LC2, LC3, LC4, LC5) correspondante destinée à emballer les produits, le système (10) de transfert de produits comprend :
un magasin de stockage (M), prédisposé dans une position à l'intérieur de l'environnement clos (Z) entre ladite au moins une sortie (I1, I2, I3) de ladite au moins une ligne de production (LP1, LP2, LP3) et ladite au moins une entrée (O1, O2, O3, O4, O5) de ladite au moins une ligne d'emballage (LC1, LC2, LC3, LC4, LC5), et prévu pour recevoir et stocker temporairement les produits,
le système de transfert de produits étant **caractérisé en ce qu'**il comprend en outre :
une première série de drones (D1), chacun desquels comprenant des moyens de prise (P1) correspondants pour prélever et relâcher les produits et étant prédisposé pour voler à l'intérieur de l'environnement clos (Z),
une deuxième série de drones (D2), chacun desquels comprenant des moyens de prise (P2) correspondants pour prélever et relâcher les produits et étant prédisposé pour voler à l'intérieur de l'environnement clos (Z),
des moyens (C ; V1, V2) de commande et de guidage du vol et du mouvement aéroporté de la première série de drones (D1) et de la deuxième série de drones (D2) à l'intérieur de l'environnement clos (Z), les moyens de commande et de guidage (C, V1, V2) étant prédisposés de manière à :
commander et guider le vol de la première série de drones (D1) de manière à ce que chacun d'eux puisse voler à l'intérieur de l'environnement clos (Z) et, cycliquement, être positionné au niveau de ladite au moins une sortie (I1, I2, I3) de ladite au moins une ligne de production (LP1, LP2, LP3), prélever un produit correspondant, transférer le produit et placer le produit en appui sur le magasin de stockage (M) ;
commander et guider le vol de la deuxième série de drones (D2) de manière à ce que chacun d'eux puisse voler à l'intérieur de l'environnement clos (Z) et, cycliquement, être positionné au niveau du magasin de stockage (M), prélever un produit du magasin (M), transférer le produit et placer le produit au niveau de ladite au moins une entrée (O1, O2, O3, O4, O5) de ladite au moins une ligne d'emballage (LC1, LC2, LC3, LC4, LC5).

2. Le système de transfert de produits selon la revendication 1, **caractérisé en ce que** la première série de drones (D1) comprend au moins une paire de drones (D1) pour chaque sortie (I1, I2, I3) des lignes de production (LP1, LP2, LP3) et pouvant être commandés pour prélever des produits de la sortie (I1, I2, I3) et les transférer au magasin (M), et **en ce que** la deuxième série de drones (D2) comprend au moins une paire de drones (D2) pour chaque entrée (O1, O2, O3, O4, O5) des lignes d'emballage (LC1, LC2, LC3, LC4, LC5), ladite au moins une paire de drones (D2) pouvant être commandée pour prélever les produits du magasin (M) et les relâcher au niveau de l'entrée (O1, O2, O3, O4, O5).

3. Le système de transfert de produits selon l'une quelconque des revendications précédentes, **caractérisé en ce que** les moyens (C, V1, V2) de commande et de guidage du vol et du mouvement aéroporté de la première série de drones (D1) et de la deuxième série de drones (D2) à l'intérieur de l'environnement clos (Z) comprennent une unité de contrôle et de commande (C) destinée à contrôler et à commander, via des radiofréquences, les drones (D1) de la première série de drones (D1) et les drones (D2) de la deuxième série de drones (D2).

4. Le système de transfert de produits selon la revendication 3, **caractérisé en ce que** les moyens de commande et de guidage (C, V1, V2) comprennent en outre au moins une caméra vidéo (V1, V2) située à l'intérieur de l'environnement clos (Z) et prédisposée de manière à détecter et à acquérir des images en temps réel de la position des drones (D1) de la première série de drones (D1) et des drones (D2) de la deuxième série de drones (D2) et de l'emplacement de ladite au moins une sortie (I1, I2, I3) de ladite au moins une ligne de production (LP1, LP2, LP3) et de l'emplacement de ladite au moins une entrée (O1, O2, O3, O4, O5) de ladite au moins une ligne d'emballage (LC1, LC2, LC3, LC4, LC5) et à transmettre des informations et des données sur les positions des drones (D1, D2) à l'unité de contrôle et de commande (C).

5. Le système de transfert de produits selon la revendication 4, **caractérisé en ce que** les moyens de commande et de guidage (C, V1, V2) comprennent une première série de caméras vidéo (V1) situées dans des positions déterminées et correspondantes à l'intérieur de l'environnement clos (Z) et prédisposées de manière à détecter et à acquérir des images en temps réel de la position des drones (D1) de la première série de drones (D1) et de l'emplacement des sorties (I1, I2, I3) des lignes de production (LP1, LP2, LP3) et à transmettre des informations et des données sur les positions de ces drones (D1) à l'unité de contrôle et de commande (C), et une deuxième série de caméras vidéo (V2) situées dans des positions déterminées et correspondantes à l'intérieur de l'environnement clos (Z) et prédisposées de manière à détecter et à acquérir des images en temps réel de la position des drones (D2) de la deuxième série de drones (D2) et de l'emplacement des entrées (O1, O2, O3, O4, O5) des lignes d'emballage (LC1, LC2, LC3, LC4, LC5) et à transmettre des informations et des données sur les positions de ces drones (D2) à l'unité de contrôle et de commande (C).

6. Le système de transfert de produits selon l'une quelconque des revendications de 3 à 6, **caractérisé en ce que** les drones (D1) de la première série de drones (D1) et les drones (D2) de la deuxième série de drones (D2) sont munis, chacun, d'un récepteur GPS et **en ce que** l'unité de contrôle et de commande (C) comprend un système de détection et de contrôle par GPS de la position des drones (D1, D2).

7. Le système de transfert de produits selon l'une quelconque des revendications précédentes, **caractérisé en ce que** le magasin de stockage (M) comprend un châssis (T) et une série de moyens transporteurs (T1, T2, T3) portés par le châssis (T), les moyens transporteurs (T1, T2, T3) étant disposés de manière à pouvoir recevoir, au niveau d'une première extrémité de ceux-ci, les produits relâchés par les drones (D1) de la première série de drones (D1), et pouvant être activés de manière à déplacer ces produits par translation au niveau de leur deuxième extrémité, afin de permettre aux drones (D2) de la deuxième série de drones (D2) de prélever les produits de cette deuxième extrémité et de transférer les produits aux entrées (O1, O2, O3, O4, O5) des lignes d'emballage (LC1, LC2, LC3, LC4, LC5).

8. Le système de transfert de produits selon la revendication 7, **caractérisé en ce que** le magasin de stockage (M) comprend une première série de moyens transporteurs (T1) portés par le châssis (T) qui sont disposés sur un même premier niveau et sont les uns à côté des autres, et au moins une deuxième série de moyens transporteurs (T2, T3) portés par le châssis (T), les uns à côté des autres et disposés supérieurement à la première série de moyens transporteurs (T1) et présentant une extension inférieure à celle de la première série de moyens transporteurs (T1).
